# EUROPEAN PATENT SPECIFICATION

(11) **EP 2 927 446 B1**
(45) Date of publication and mention of the grant of the patent: **20.07.2016**
(21) Application number: 15157153.6
(22) Date of filing: 02.03.2015
(51) Int. Cl.: F01N 3/035, F01N 3/08, F01N 9/00

(54) **Exhaust purifying apparatus for internal combustion engine**
Abgasreinigungsvorrichtung für einen Verbrennungsmotor
Appareil de purification d'échappement pour moteur à combustion interne

(30) Priority: 26.03.2014 JP 2014064438
(43) Date of publication of application: 07.10.2015
(73) Proprietor: Mitsubishi Jidosha Kogyo K.K., Tokyo 108-8410 (JP)
(72) Inventor: Anoda, Hiroshi, Tokyo, 108-8410 (JP); Tashiro, Keisuke, Tokyo, 108-8410 (JP); Kawashima, Kazuhito, Tokyo, 108-8410 (JP)
(74) Representative: Vossius & Partner Patentanwälte Rechtsanwälte mbB

(56) References cited:
- EP-A2- 1 519 015
- WO-A1-2008/102915
- JP-A- 2002 047 923

## Description

### FIELD

The present invention relates to an exhaust purifying apparatus including catalysts that are disposed in an exhaust path of an internal combustion engine (hereinafter simply referred to as "engine") and store predetermined components of exhaust gas in an oxidizing atmosphere and release the components in a reducing atmosphere.

### BACKGROUND

The exhaust gas emitted from engines contains nitrogen oxides (hereinafter referred to as "NOx"), such as nitrogen monoxide (NO) and nitrogen dioxide (NO₂), and a sulfur component, which are hereinafter collectively referred to as "predetermined components." Some engines are provided with NOx trapping catalysts (storage reduction catalysts) as exhaust purifying catalysts in the exhaust paths to reduce NOx in the predetermined components of the exhaust gas. The NOx trapping catalysts store NOx of the exhaust gas in the form of a nitrate salt in a fuel-lean atmosphere having a relatively high oxygen level, and reduce the stored NOx to elemental nitrogen (N₂) in a fuel-rich atmosphere having a relatively low oxygen level.

In response to an increase in NOx stored in the NOx trapping catalysts, the exhaust purifying apparatuses including the NOx trapping catalysts control a NOx purge, which involves the conversion of the exhaust gas atmosphere into a fuel-rich atmosphere through supply of a reductant for reducing NOx, thereby reducing NOx to N₂ through the release of NOx from the NOx trapping catalysts. Some engines further include oxidizing catalysts for oxidizing components of the exhaust gas and/or filters for trapping particulate matters (PMs) in the exhaust gas in the exhaust paths, in addition to the NOx trapping catalysts.

For example, PTL 1 (Japanese Patent No. 3812302) discloses an exhaust purifying apparatus including a NOx trapping catalyst, a filter, and another NOx trapping catalyst in sequence from the upstream side of the exhaust path according to the third embodiment. If the quantity of PMs accumulated in the filter exceeds an upper limit and if the quantity of NOx stored in the upstream NOx trapping catalyst increases to a predetermined quantity, the, exhaust purifying apparatus starts a HC-level varying operation to appropriately increase the HC level. This control separates NOx in the form of NO₂ from the upstream NOx trapping catalyst, and supplies NO₂ to the filter to efficiently combust and remove PMs accumulated in the filter. If the quantity of NOx stored in the downstream NOx trapping catalyst exceeds a predetermined saturation quantity, the exhaust purifying apparatus starts a fuel-rich operation to reduce NOx stored in the downstream NOx trapping catalyst in advance of the HC-level varying operation.

In general, the reduction of NOx stored in a NOx trapping catalyst requires the generation of a fuel-rich atmosphere (reducing atmosphere) around the NOx trapping catalyst through supply of a reductant. Thus, frequent NOx purging controls may decrease the fuel efficiency. In particular, the exhaust purifying apparatus including two NOx trapping catalysts in the exhaust path as disclosed in PTL 1 needs NOx purging controls for the NOx trapping catalysts in response to the quantities of NOx stored in the NOx trapping catalysts, respectively, and thus readily suffers from a decrease in the fuel efficiency due to the NOx purging controls.

The NOx trapping catalysts also store a sulfur component in the exhaust gas. A typical exhaust purifying apparatus thus periodically executes an S purging control to release the sulfur component from the NOx trapping catalysts. The S purging control involves heating of the NOx trapping catalysts to a temperature higher than that in the NOx purging control through injection of additional fuel. Thus, frequent S purging controls may decrease the fuel efficiency.

### SUMMARY

### TECHNICAL PROBLEMS

An object of the invention, which has been accomplished to solve the above problems, is to provide an exhaust purifying apparatus for an internal combustion engine that can appropriately remove a predetermined component from exhaust gas while maintaining the fuel efficiency. Another object of the invention is to provide advantageous effects that are derived from the individual features described in the Description of Embodiment below but not from conventional techniques.

### SOLUTION TO PROBLEMS

(1) An exhaust purifying apparatus for an internal combustion engine disclosed herein includes: an upstream catalyst disposed in an exhaust path of the internal combustion engine, the upstream catalyst storing a predetermined component of exhaust gas in an oxidizing atmosphere and releasing the predetermined component in a reducing atmosphere; a downstream catalyst disposed downstream of the upstream catalyst in the exhaust path, the downstream catalyst storing the predetermined component of the exhaust gas in an oxidizing atmosphere and releasing the predetermined component in a reducing atmosphere; and a controller to execute a first purging control if a quantity of the predetermined component stored in the upstream catalyst becomes equal to or larger than a first threshold, the first purging control involving release of the predetermined component from the upstream catalyst through supply of a reductant, and to execute a second purging control if a quantity of the predetermined component stored in the downstream catalyst becomes equal to or larger than a second threshold, the second purging control involving release of the predetermined component from the downstream catalyst through supply of the reductant. If the quantity of the predetermined component stored in the upstream catalyst exceeds a third threshold and if the quantity of the predetermined component stored in the downstream catalyst exceeds a fourth threshold, the controller simultaneously and continuously executes the first purging control and the second purging control, the third threshold being smaller than the first threshold, the fourth threshold being smaller than the second threshold.
(2) The controller may preferably start the second purging control after start of the first purging control in the simultaneous and continuous execution of the first purging control and the second purging control.
(3) If the quantity of the predetermined component stored in the upstream catalyst falls below a fifth threshold smaller than the third threshold, the controller may preferably stop the first purging control.
(4) If the quantity of the predetermined component stored in the downstream catalyst falls below a sixth threshold smaller than the fourth threshold, the controller may preferably stop the second purging control.
(5) The exhaust purifying apparatus may preferably further include a filter disposed between the upstream catalyst and the downstream catalyst in the exhaust path, the filter trapping a particulate matter in the exhaust gas. The predetermined component may preferably contain nitrogen oxides in the exhaust gas. In this case, the controller may preferably start a regenerating control after the start of at least one of the first purging control and the second purging control, in a case where the controller executes both the regenerating control and the at least one of the first purging control and the second purging control, the regenerating control involving removal of the particulate matter from the filter based on the quantity of the particulate matter trapped in the filter.
(6) The controller may preferably start, if a waiting time from determination of the regenerating control to be executed to the start of the regenerating control becomes equal to or longer than a predetermined period, the regenerating control in advance of the at least one of the first purging control and the second purging control.
(7) The controller may preferably control an injector, which is disposed upstream of the upstream catalyst in the exhaust path, to supply the reductant during the first purging control. The controller may preferably control cylinder injection valves of the internal combustion engine to supply the reductant during the second purging control.

### ADVANTAGEOUS EFFECTS

In the exhaust purifying apparatus for an internal combustion engine, the thresholds (third and fourth thresholds) for simultaneous and continuous execution of the respective purging controls for the upstream and downstream catalysts are adjusted to be smaller than the respective thresholds (first and second thresholds) for execution of one of the purging controls alone. This adjustment allows the purging controls for the upstream and downstream catalysts to be executed simultaneously and continuously as much as possible, thereby effectively preventing a decrease in the fuel efficiency.

### BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:

FIG. 1 is a schematic diagram of the entire configuration of an internal combustion engine equipped with an exhaust purifying apparatus according to a first embodiment;
FIG. 2 is a graph illustrating the correlation between the load and purification performance of NOx in the exhaust purifying apparatus illustrated in FIG. 1;
FIG. 3 is a schematic graph illustrating variations in quantities of NOx stored in an upstream NOx trapping catalyst and a downstream NOx trapping catalyst in the exhaust purifying apparatus illustrated in FIG. 1;
FIG. 4 is a flowchart illustrating a control procedure (for determination of requirement for a NOx purge) in the exhaust purifying apparatus illustrated in FIG. 1;
FIG. 5 is a main flowchart illustrating a control procedure in the exhaust purifying apparatus illustrated in FIG. 1;
FIGS. 6A and 6B are each a sub-flowchart of FIG. 5; FIG. 6A illustrates NOx purging controls; FIG. 6B illustrates regenerating control; and
FIG. 7 is a schematic diagram of the entire configuration of an internal combustion engine equipped with an exhaust purifying apparatus according to a second embodiment.

### DESCRIPTION OF EMBODIMENTS

Embodiments of the invention will now be described with reference to the accompanying drawings. The embodiments are mere illustrative examples and do not intend to exclude application of various modifications or techniques that are not described in the embodiments.

### [1. First Embodiment]

### [1-1. Configuration of Apparatus]

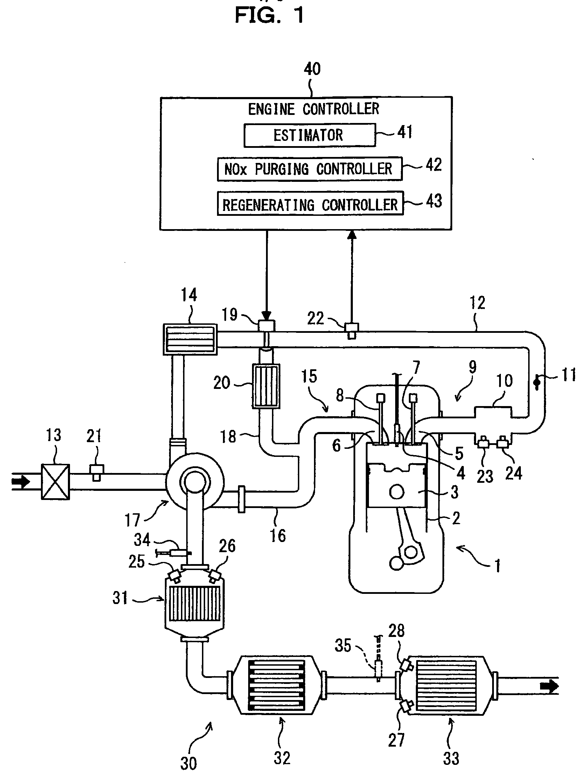

An exhaust purifying apparatus according to a first embodiment is assembled to a diesel engine (internal combustion engine) 1 mounted in a vehicle. The engine 1 includes multiple cylinders 2. Although FIG. 1 illustrates only one of the cylinders 2, the other cylinders 2 have substantially the same configurations. The cylinders 2 of the engine 1 each include a piston 3, which has a top cavity and reciprocates within the cylinder 2 in a direction.

A cylinder head mounted on a top of the cylinder 2 is provided with cylinder injection valves (injectors) 4 for injecting fuel. The leading end of the cylinder injection valve 4 protrudes to the internal space of the cylinder 2 to directly inject fuel into the cylinder 2. The cylinder injection valve 4 is connected to a fuel pipe at the base end, to be supplied with pressurized fuel through the fuel pipe. The quantities and timings of injection of fuel from the cylinder injection valve 4 are controlled by an engine controller 40 (described below).

The cylinder head is provided with an intake port 5 and an exhaust port 6 in communication with the internal space of the cylinder 2, and an intake valve 7 and an exhaust valve 8 to open or close the respective ports 5 and 6. The intake port 5 leads to an intake manifold 9 upstream thereof. The intake manifold 9 includes a surge tank 10 for temporarily reserving air flowing toward the intake port 5. The intake manifold 9 is connected to a throttle body (not shown) upstream thereof, which includes an electronically controlled throttle valve 11. The quantity of air supplied to the intake manifold 9 is adjusted depending on the opening (throttle opening) of the throttle valve 11. The throttle opening is controlled by the engine controller 40. The throttle body is connected to an intake path 12 upstream thereof. The intake path 12 includes an air filter 13 at the most upstream section, and is supplied with fresh air filtered through the air filter 13.

The exhaust ports 6 of the cylinders 2 lead to an exhaust manifold 15 downstream thereof in the flow of exhaust gas. The exhaust manifold 15 is connected to an exhaust path 16 downstream thereof. The engine 1 further includes a turbocharger (supercharger) 17 in an intake and exhaust system to compress intake air to be supplied to the cylinders 2 by the exhaust pressure. In specific, the turbocharger 17 is arranged over both of the intake path 12 and the exhaust path 16. The turbocharger 17 compresses the intake air in the intake path 12 to supercharge the engine 1, through the rotation of a turbine in the exhaust path 16 by the exhaust pressure in the exhaust path 16 and the driving of a compressor in the intake path 12 by the torque of the turbine. The intake path 12 further includes an intercooler 14 downstream of the compressor in the flow of intake air to cool the compressed air.

The engine 1 according to the first embodiment further includes an exhaust gas recirculation (EGR) path (counter-flow path or recirculation path) 18 for recirculating the exhaust gas from the exhaust path 16 to the intake path 12. The EGR path 18 connects a portion of the exhaust path 16 upstream of the turbine of the turbocharger 17 to a portion of the intake path 12 downstream of the compressor, and functions as a high-pressure EGR path. The joint between the EGR path 18 and the intake path 12 includes an EGR valve 19. The quantity of recirculated gas flowing through the EGR path 18 is adjusted depending on the opening of the EGR valve 19. The opening of the EGR valve 19 is controlled by the engine controller 40. For example, the engine controller 40 controls the opening of the EGR valve 19 to zero (closes the EGR valve 19) to block the recirculated gas during a regenerating control (explained below). The EGR path 18 includes an EGR cooler 20 for cooling the recirculated gas.

The exhaust path 16 is provided with an exhaust purifying apparatus 30 downstream of the turbine. The exhaust purifying apparatus 30 includes an upstream NOx trapping catalyst (upstream catalyst) 31, a filter 32, a downstream NOx trapping catalyst (downstream catalyst) 33 in sequence from the upstream side in the flow of exhaust gas. The exhaust gas in the exhaust path 16 is purified by the exhaust purifying apparatus 30 and then is exhausted to the outside of the vehicle. The exhaust purifying apparatus 30 further includes the engine controller 40 (described below).

The upstream NOx trapping catalyst 31 and the downstream NOx trapping catalyst 33 each store NOx (a predetermined component) in exhaust gas in the form of a nitrate salt onto its carrier in an oxidizing atmosphere (at an air-fuel ratio of exhaust gas leaner than the theoretical air-fuel ratio), and reduce NOx to N₂ through the release of the stored NOx in a reducing atmosphere (at an air-fuel ratio of exhaust gas richer than the theoretical air-fuel ratio). The upstream NOx trapping catalyst 31 and the downstream NOx trapping catalyst 33 each include an storing agent for storing NOx and a noble metal for reducing NOx.

In this example, the upstream NOx trapping catalyst 31 and the downstream NOx trapping catalyst 33 are composed of the same types and the same quantities of storing agent and noble metal, and are collectively referred to as "NOx trapping catalysts 31 and 33." Although the downstream NOx trapping catalyst 33 has a larger capacity than that of the upstream NOx trapping catalyst 31 in FIG. 1, they may have the same capacity. The NOx trapping catalysts 31 and 33 have superior (maximum) purification performance of NOx in a certain temperature range. In other words, the purification ability (in other words, purification performance) of NOx is not always constant but varies depending on the temperatures of the NOx trapping catalysts 31 and 33, and reaches the maximum in the certain temperature range.

The upstream NOx trapping catalyst 31 and the downstream NOx trapping catalyst 33 can store different quantities (maximum quantities) of NOx depending on their capacities. If the quantities of NOx stored in the upstream NOx trapping catalyst 31 and the downstream NOx trapping catalyst 33 approach the respective maximum quantities (saturated states), the engine controller 40 executes a control (hereinafter referred to as "NOx purging control") involving reducing NOx to N₂ through the release of NOx from the upstream NOx trapping catalyst 31 and/or the downstream NOx trapping catalyst 33.

The NOx trapping catalysts 31 and 33 also store a sulfur component (a predetermined component; also referred to as "S") in exhaust gas. The NOx trapping catalysts 31 and 33 can release only a minute part of the sulfur component stored therein through the NOx purging control, and thus gradually lose the main function (performance) of storing NOx due to a gradual increase in the stored a sulfur component. This phenomenon is called sulfur poisoning. In order to avoid the sulfur poisoning in the NOx trapping catalysts 31 and 33, the engine controller 40 executes a control (hereinafter referred to as "S purging control") involving release of the sulfur component from the NOx trapping catalysts 31 and 33, separately from the NOx purging control.

The filter 32 is porous and has a relatively high thermal capacity. The filter 32 traps particulate matters (hereinafter referred to as "PMs") in exhaust gas. The interior of the filter 32 is partitioned by porous walls into multiple segments along the flow of exhaust gas. The walls each have many pores sized to PMs. The walls trap PMs therein and thereon while exhaust gas is passing near or through the walls. The PMs trapped in the filter 32 are continuously oxidized through continuous regeneration. In addition, the engine controller 40 executes a regenerating control to regenerate the filter 32 through forced combustion of the PMs.

The filter 32 is interposed between the upstream NOx trapping catalyst 31 and the downstream NOx trapping catalyst 33 along the exhaust path 16 in the exhaust purifying apparatus 30. Thus, the upstream NOx trapping catalyst 31 has a different temperature from that of the downstream NOx trapping catalyst 33. In specific, since the temperature of exhaust gas in the exhaust path 16 increases toward the upstream side, the upstream NOx trapping catalyst 31 is more readily heated by the exhaust gas than the downstream NOx trapping catalyst 33. High-temperature exhaust gas is cooled while passing through the upstream NOx trapping catalyst 31, is further cooled while passing through the filter 32 having a high thermal capacity, and then passes through the downstream NOx trapping catalyst 33. The downstream NOx trapping catalyst 33 is thus less heated than the upstream NOx trapping catalyst 31 and has a lower temperature than that of the upstream NOx trapping catalyst 31. The temperature of exhaust gas varies depending on the operating region of the engine 1. In this embodiment, the operating region is defined by the load on the engine 1. Alternatively, the operating region may be defined by the load on the engine 1 and the number of revolutions of the engine 1. In specific, a higher load leads to a higher temperature of exhaust gas.

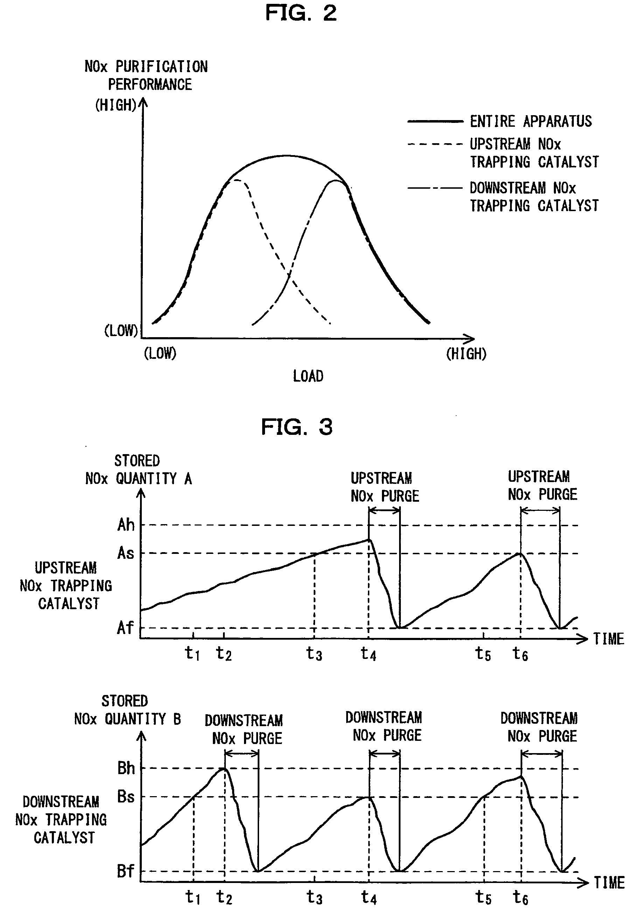

The NOx trapping catalysts 31 and 33 have maximum purification performance of NOx in the certain temperature range, as described above. The upstream NOx trapping catalyst 31 and the downstream NOx trapping catalyst 33 disposed in different temperature zones thus have high purification performance of NOx in different operating regions. This configuration can improve the overall purification performance of NOx in the apparatus. The mechanism will now be explained with reference to FIG. 2. A broken line and a one-dot chain line in FIG. 2 respectively indicate the purification performance of NOx in the upstream NOx trapping catalyst 31 and the downstream NOx trapping catalyst 33, and a solid line indicates the overall purification performance of NOx in the apparatus. The load on the engine 1 along the horizontal axis is positively correlated with the temperature of exhaust gas, as described above. In other words, a higher load leads to a higher temperature of exhaust gas.

With reference to FIG. 2, the upstream NOx trapping catalyst 31 has maximum purification performance of NOx at a lower load, whereas the downstream NOx trapping catalyst 33 has maximum purification performance of NOx at a higher load, for the following reasons. At a lower load on the engine 1, the upstream NOx trapping catalyst 31 is heated by exhaust gas to a temperature range suitable for the purification of NOx, whereas the downstream NOx trapping catalyst 33 is not heated to a suitable temperature range. At a higher load on the engine 1, the upstream NOx trapping catalyst 31 is excessively heated by exhaust gas to a temperature higher than a temperature range suitable for the purification of NOx and thus has decreased purification performance of NOx, whereas the downstream NOx trapping catalyst 33 receives high-temperature exhaust gas and is heated to a temperature range suitable for the purification of NOx.

In other words, the upstream NOx trapping catalyst 31 mainly reduces NOx in a low-load operating region of the engine 1, whereas the downstream NOx trapping catalyst 33 mainly reduces NOx in a high-load operating region of the engine 1. This configuration can ensure high purification performance of NOx in the apparatus over all the operating regions of the engine 1.

The exhaust purifying apparatus 30 further includes an upstream injector 34 directly upstream of the upstream NOx trapping catalyst 31 in the exhaust path 16. The upstream injector 34 directly supplies the exhaust path 16 with a reductant, such as carbon monoxide (CO) or hydrocarbon (HC). The leading end of the upstream injector 34 protrudes in the exhaust path 16. The base end of the upstream injector 34 is connected to a fuel pipe leading to a fuel pump. In this example, fuel functions as a reductant.

During the NOx purging control and the S purging control, the upstream injector 34 supplies the upstream NOx trapping catalyst 31 with the reductant, to generate a reducing atmosphere (fuel-rich atmosphere) around the upstream NOx trapping catalyst 31 and heat the upstream NOx trapping catalyst 31. The quantities and timings of injection of the reductant from the upstream injector 34 is controlled by the engine controller 40. The reductant is supplied to the downstream NOx trapping catalyst 33 through the post-injection from the cylinder injection valves 4. In specific, the cylinder injection valves 4 inject fuel at a timing (e.g., in the latter half of an expansion stroke or an exhaustion stroke) not contributing to the torque, to supply the exhaust path 16 with unburned fuel serving as a reductant.

The intake path 12 is provided with an air-flow sensor 21 between the air filter 13 and the compressor to detect the flow rate of intake air. The flow rate of intake air corresponds to the flow rate of air passing through the air filter 13. The intake path 12 is further provided with an air-fuel ratio sensor 22 between the EGR valve 19 and the surge tank 10 to detect the air-fuel ratio of intake air. The air-fuel ratio sensor 22 detects the oxygen level of intake air flowing in the intake path 12 and outputs a value proportional to the oxygen level through linear sensing. The surge tank 10 is equipped with an intake-manifold pressure sensor 23 and an intake-air temperature sensor 24. The intake-manifold pressure sensor 23 detects an intake-manifold pressure indicating the pressure in the surge tank 10, whereas the intake-air temperature sensor 24 detects the temperature of intake air in the surge tank 10.

The exhaust path 16 is provided with an air-fuel ratio sensor 25 for detecting the air-fuel ratio of exhaust gas and an exhaust-gas temperature sensor 26 for detecting the temperature of the exhaust gas in a section downstream of the upstream injector 34 and upstream of the upstream NOx trapping catalyst 31. The exhaust path 16 is further provided with an air-fuel ratio sensor 27 for detecting the air-fuel ratio of exhaust gas and an exhaust-gas temperature sensor 28 for detecting the temperature of the exhaust gas directly upstream of the downstream NOx trapping catalyst 33. The engine 1 may also be equipped with any other sensor, such as a revolution counter of the engine 1, a temperature sensor for detecting the temperature of cooling water for the engine 1, and/or a pressure sensor for detecting the pressure of fuel injected from the cylinder injection valves 4 or the upstream injector 34. The information detected by the sensors 21 to 28 is transmitted to the engine controller 40.

The vehicle including the engine 1 is equipped with an engine controller (controller) 40. The engine controller 40 is composed of, for example, an LSI device or embedded electronic device into which a microprocessor, a ROM, and a RAM are integrated. The engine controller 40 is connected to a communication line of a network provided in the vehicle. The in-vehicle network includes other electronic controllers, such as a brake controller and an air conditioner, which are connected for mutual communication.

The engine controller 40 is an electronic controller, which comprehensively controls various systems, such as an ignition system, a fuel injection system, an intake and exhaust system, and a valve system, on the engine 1. The engine controller 40 controls the quantities of air and fuel supplied to the respective cylinders 2 of the engine 1, the timings of ignition in the cylinders 2, and the supercharging pressure. The input port of the engine controller 40 is connected to the sensors 21 to 28. Specific targets to be controlled by the engine controller 40 include the quantities and timings of injection of fuel from the cylinder injection valves 4, the operating mode of the turbocharger 17, the throttle opening, the opening of the EGR valve 19, the quantities and timings of injection of the reductant from the upstream injector 34. The NOx purging control for the NOx trapping catalysts 31 and 33 and the regenerating control for the filter 32 will now be explained in detail according to the first embodiment.

### [1-2. Configuration of Control]

With reference to FIG. 1, the engine controller 40 includes an estimator 41, a NOx purging controller 42, and a regenerating controller 43 to achieve the two controls. These elements may be electronic circuits (hardware), or may be incorporated into a program (software). Alternatively, some of the functions of the elements may be provided in the form of hardware while the other may be provided in the form of software.

The estimator 41 estimates the quantity (stored NOx quantity A) of NOx stored in the upstream NOx trapping catalyst 31, the quantity (stored NOx quantity B) of NOx stored in the downstream NOx trapping catalyst 33, and the quantity (accumulated PM quantity D) of PMs accumulated in the filter 32. The stored NOx quantities A and B can be estimated through any known technique, for example, on the basis of the operating region of the engine 1, the temperature of exhaust gas, the air-fuel ratio, and/or the flow rate. With reference to FIG. 2, the stored NOx quantity A in the upstream NOx trapping catalyst 31 mainly increases in a low-load operating region of the engine 1 or a lower temperature range of exhaust gas, whereas the stored NOx quantity B in the downstream NOx trapping catalyst 33 mainly increases in a high-load operating region of the engine 1 or a higher temperature range of exhaust gas. During a NOx purging control (explained below), NOx stored in the upstream NOx trapping catalyst 31 or the downstream NOx trapping catalyst 33 is released and reduced, resulting in a decrease in the stored NOx quantity A or B at a certain rate.

In order to estimate the accumulated PM quantity D, for example, the estimator 41 estimates the emission rate of PMs from the engine 1 on the basis of the number of revolutions of the engine 1 or the load on the engine 1, and then integrates the estimated rate from the end of the previous regenerating control to the current time. Alternatively, the estimator 41 may use a known technique to estimate the accumulated PM quantity D on the basis of the detected or estimated difference in pressure between the upstream and downstream sides of the filter 32. The estimator 41 transmits the estimated stored NOx quantities A and B, and the estimated accumulated PM quantity D to the NOx purging controller 42 and the regenerating controller 43.

The NOx purging controller 42 executes an upstream NOx purging control (first purging control) for reducing NOx stored in the upstream NOx trapping catalyst 31 through supply of the reductant in response to the state (quantity A) of NOx stored in the upstream NOx trapping catalyst 31, and executes a downstream NOx purging control (second purging control) for reducing NOx stored in the downstream NOx trapping catalyst 33 through supply of the reductant in response to the state (quantity B) of NOx stored in the downstream NOx trapping catalyst 33.

In specific, if the stored NOx quantity A in the upstream NOx trapping catalyst 31 estimated by the estimator 41 is equal to or larger than a predetermined upper limit threshold (first threshold) Ah (A ≥ Ah), the NOx purging controller 42 determines that the upstream NOx purging control is necessary (in other words, the upstream NOx purging control is required, or the upstream NOx purging control is to be executed). The NOx purging controller 42 then controls the upstream injector 34 to intermittently inject a predetermined quantity of reductant in an operating state compatible with the upstream NOx purging control. This control (upstream NOx purging control) can generate a fuel-rich atmosphere around the upstream NOx trapping catalyst 31 and can heat the upstream NOx trapping catalyst 31 to a temperature suitable for a NOx purge, thereby causing release and reduction of NOx from the upstream NOx trapping catalyst 31. Whether the engine 1 is in the operating state compatible with the upstream NOx purging control is determined based on, for example, the temperature of the upstream NOx trapping catalyst 31 or the load on the engine 1.

If the stored NOx quantity B in the downstream NOx trapping catalyst 33 estimated by the estimator 41 is equal to or larger than a predetermined upper limit threshold (second threshold) Bh (B ≥ Bh), the NOx purging controller 42 determines that the downstream NOx purging control is necessary. The NOx purging controller 42 then controls the cylinder injection valves 4 to perform post-injection in an operating state compatible with the downstream NOx purging control. This control (downstream NOx purging control) can generate a fuel-rich atmosphere around the downstream NOx trapping catalyst 33 and can heat the downstream NOx trapping catalyst 33 to a temperature suitable for a NOx purge, thereby causing release and reduction of NOx from the downstream NOx trapping catalyst 33. The operating state compatible with the downstream NOx purging control is also determined based on, for example, the temperature of the downstream NOx trapping catalyst 33 or the load on the engine 1.

The upper limit thresholds Ah and Bh respectively contribute to determination of removal of NOx from the upstream NOx trapping catalyst 31 and the downstream NOx trapping catalyst 33 (determination of the saturated states of the upstream NOx trapping catalyst 31 and the downstream NOx trapping catalyst 33). The upper limit thresholds Ah and Bh are preliminarily determined based on the capacities of the upstream NOx trapping catalyst 31 and the downstream NOx trapping catalyst 33, respectively. It is noted that the intermittent injection of the reductant from the upstream injector 34 can prevent the generation of hydrogen sulfide (H₂S).

If the stored NOx quantity A estimated by the estimator 41 falls below a predetermined termination threshold (fifth threshold) Af (A < Af) after the start of the upstream NOx purging control, the NOx purging controller 42 controls the upstream injector 34 to stop the injection of the reductant to terminate the upstream NOx purging control. In the same manner, if the stored NOx quantity B estimated by the estimator 41 falls below a termination threshold (sixth threshold) Bf (B < Bf) after the start of the downstream NOx purging control, the NOx purging controller 42 controls the cylinder injection valves 4 to stop the post-injection to terminate the downstream NOx purging control. The termination threshold Af for the upstream control and the termination threshold Bf for the downstream control are each preliminarily determined to be a small value close to zero. These termination thresholds may be identical to or different from each other.

As described above, the NOx purging controller 42 independently controls the upstream NOx purge and the downstream NOx purge depending on the stored NOx quantities A and B in the NOx trapping catalysts 31 and 33, respectively. If the upstream and downstream NOx purging controls are determined to be executed at the same timing (i.e., if the two NOx purging controls is determined to be necessary; if A ≥ Ah and if B ≥ Bh), the NOx purging controller 42 first starts the upstream NOx purging control and then the downstream NOx purging control for simultaneous and continuous execution of the two NOx purging controls. In other words, the NOx purging controller 42 determines the timing of start of the downstream NOx purging control in a period (between the start and the end) of the upstream NOx purging control. In this embodiment, the simultaneous and continuous execution means that the upstream and downstream NOx purging controls are executed at the same timing such that the downstream control is started immediately after the start of the upstream control. In other words, in this embodiment, executing the upstream and downstream NOx purging controls simultaneously and continuously means that the upstream and downstream NOx purging controls are executed at the same timing such that the downstream control is started immediately after the start of the upstream control.

This configuration allows the reductant unconsumed in the upstream NOx purging control to be used in the downstream NOx purging control, thereby preventing a decrease in the fuel efficiency. The configuration can also readily keep a sufficiently high temperature of the downstream NOx trapping catalyst 33 to improve the NOx reduction efficiency in the downstream NOx trapping catalyst 33. In other words, the upstream and downstream NOx purging controls should preferably be executed simultaneously and continuously as much as possible.

In order to meet such requirement, the engine controller 40 according to the first embodiment has a predetermined determination threshold (third threshold) As smaller than the upstream upper limit threshold Ah and larger than the upstream termination threshold Af (Ah > As > Af) and a predetermined determination threshold (fourth threshold) Bs smaller than the downstream upper limit threshold Bh and larger than the downstream termination threshold Bf (Bh > Bs > Bf). If the stored NOx quantities A and B estimated by the estimator 41 both exceed the respective determination thresholds As and Bs, the NOx purging controller 42 simultaneously and continuously executes the upstream and downstream NOx purging controls.

The NOx purging controls will now be explained with reference to FIG. 3. FIG. 3 is a schematic graph illustrating variations in the stored NOx quantity A in the upstream NOx trapping catalyst 31 and the stored NOx quantity B in the downstream NOx trapping catalyst 33. The upstream NOx trapping catalyst 31 has two thresholds, the upper limit threshold Ah and the determination threshold As, to determine execution of the upstream NOx purging control. The downstream NOx trapping catalyst 33 also has two thresholds, the upper limit threshold Bh and the determination threshold Bs, to determine execution of the downstream NOx purging control. With reference to FIG. 3, the stored NOx quantities A and B in the upstream NOx trapping catalyst 31 and the downstream NOx trapping catalyst 33 increase at rates depending on the operating state of the engine 1. In this example, the downstream NOx trapping catalyst 33 stores a larger quantity of NOx at a higher rate than that of the upstream NOx trapping catalyst 31.

At a time t₁ when the stored NOx quantity B in the downstream NOx trapping catalyst 33 exceeds the determination threshold Bs, the NOx purging controller 42 checks for the stored NOx quantity A in the upstream NOx trapping catalyst 31. Because of the stored NOx quantity A not exceeding the determination threshold As, the NOx purging controller 42 executes no NOx purging control at the time t₁. The stored NOx quantity A does not exceed the determination threshold As before the stored NOx quantity B increases to the upper limit threshold Bh. After a time t₂ when the stored NOx quantity B increases to the upper limit threshold Bh, the NOx purging controller 42 starts to control the downstream NOx purge in an operating state compatible with the downstream NOx purging control. It is noted that the upstream NOx trapping catalyst 31 continues the storage of NOx during the downstream NOx purging control.

At a time t₃ when the stored NOx quantity A in the upstream NOx trapping catalyst 31 exceeds the determination threshold As, the NOx purging controller 42 checks for the stored NOx quantity B in the downstream NOx trapping catalyst 33. Because of the stored NOx quantity B not exceeding the determination threshold Bs, the NOx purging controller 42 executes no NOx purging control at the time t₃. At a time t₄ when the stored NOx quantity B exceeds the determination threshold Bs, the NOx purging controller 42 starts to control the upstream NOx purge and then the downstream NOx purge to simultaneously and continuously execute the two NOx purging controls.

In the same manner, if the stored NOx quantity B in the downstream NOx trapping catalyst 33 exceeds the determination threshold Bs (time t₅) and then the stored NOx quantity A in the upstream NOx trapping catalyst 31 exceeds the determination threshold As (time t₆), the NOx purging controller 42 starts to control the upstream NOx purge and then the downstream NOx purge to simultaneously and continuously execute the two NOx purging controls. Thus, using the determination thresholds As and Bs for simultaneous and continuous execution of the upstream and downstream NOx purging controls, in addition to the upper limit thresholds Ah and Bh, can achieve the simultaneous and continuous execution of the upstream and downstream NOx purging controls as much as possible.

The regenerating controller 43 determines the necessity (requirement) of the regenerating control for removing PMs from the filter 32 on the basis of the quantity (accumulated PM quantity D) of PMs trapped in the filter 32, and executes the regenerating control as necessary (as required). In specific, if the accumulated PM quantity D estimated by the estimator 41 is equal to or larger than a predetermined regeneration initiation threshold Ds (D ≥ Ds); then the regenerating controller 43 determines that the regenerating control is necessary (in other words, the presence of requirement for the regenerating control); otherwise the regenerating controller 43 determines that the regenerating control is not necessary (in other words, no requirement for the regenerating control) .

If the regenerating control is determined to be necessary by the regenerating controller 43 and at least one of the upstream and downstream NOx purging controls is to be executed by the NOx purging controller 42, the control by the NOx purging controller 42 is prioritized. In such a case, the regenerating controller 43 starts the regenerating control after the completion of alone execution of the upstream or downstream NOx purging control or after the completion of simultaneous and continuous execution of the two NOx purging controls by the NOx purging controller 42.

During the regenerating control, the engine 1 is in a high-load operating state and the EGR valve 19 is closed to block recirculated gas, resulting in an increase in NOx emitted from the cylinders 2. The upstream NOx trapping catalyst 31 and the downstream NOx trapping catalyst 33 thus must recover the capacities of storing NOx before the regenerating control. The upstream and downstream NOx purging controls should thus precede the regenerating control if the requirement for the regenerating control coincides with the requirement for the NOx purging controls. This configuration can reduce the NOx emission during the regenerating control.

If a waiting time from the determination of the regenerating control being necessary to the start of the regenerating control becomes equal to or longer than a predetermined period t_{L}, the regenerating controller 43 executes the regenerating control in advance of the control by the NOx purging controller 42. In other words, if the NOx purging control by the NOx purging controller 42 and the regenerating control are both required, the regenerating controller 43 prioritizes the NOx purging control first. In the next stage, if the NOx purging control is not started before the predetermined period t_{L} elapses, the regenerating controller 43 starts the regenerating control. This configuration can prevent trouble of the engine 1 caused by a large quantity of PMs accumulated in the filter 32. If no control is executed by NOx purging controller 42 and if the regenerating control is determined to be necessary, the regenerating controller 43 readily starts the regenerating control.

The regenerating controller 43 controls the upstream injector 34 to intermittently inject a predetermined quantity of reductant to combust the reductant on the upstream NOx trapping catalyst 31. This control (regenerating control) can heat the filter 32 to a temperature suitable for the combustion of PMs and thus regeneration of the filter 32. The regeneration initiation threshold Ds contributes to determination of the removal of PMs from the filter 32 through the forced combustion. The regeneration initiation threshold Ds is preliminarily determined based on the rate of change in the pressure drop through the filter 32 or the risk of melting of the filter 32 due to excessively accumulated PMs. In the regenerating control, the injection of the reductant from the upstream injector 34 may be replaced with the post-injection of fuel from the cylinder injection valves 4 to supply the exhaust path 16 with fuel.

If the accumulated PM quantity D estimated by the estimator 41 falls below a predetermined regeneration termination threshold Df (D < Df) after the start of the regenerating control, the regenerating controller 43 stops the injection of the reductant from the upstream injector 34 or the post-injection from the cylinder injection valves 4 to terminate the regenerating control. The regeneration termination threshold Df is preliminarily determined to be a small value close to zero.

### [1-3. Flowcharts]

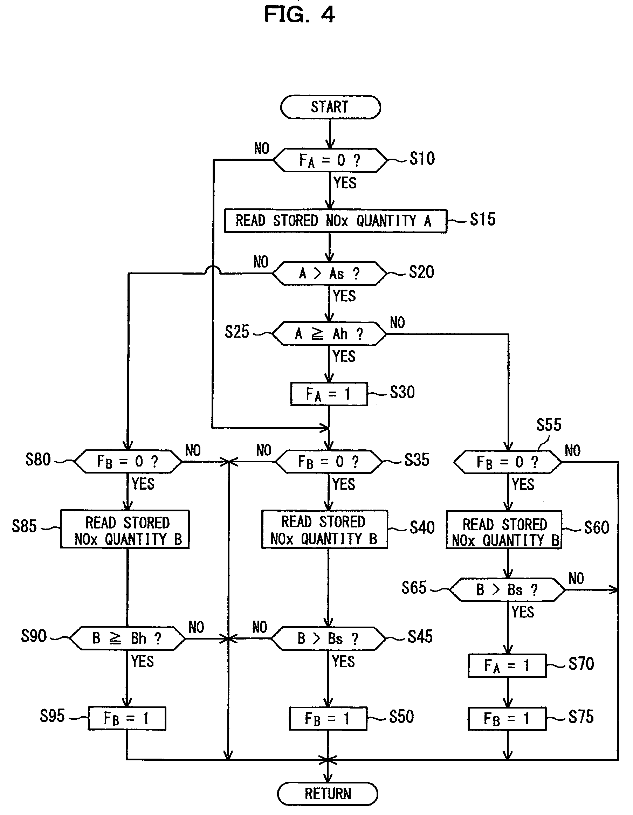

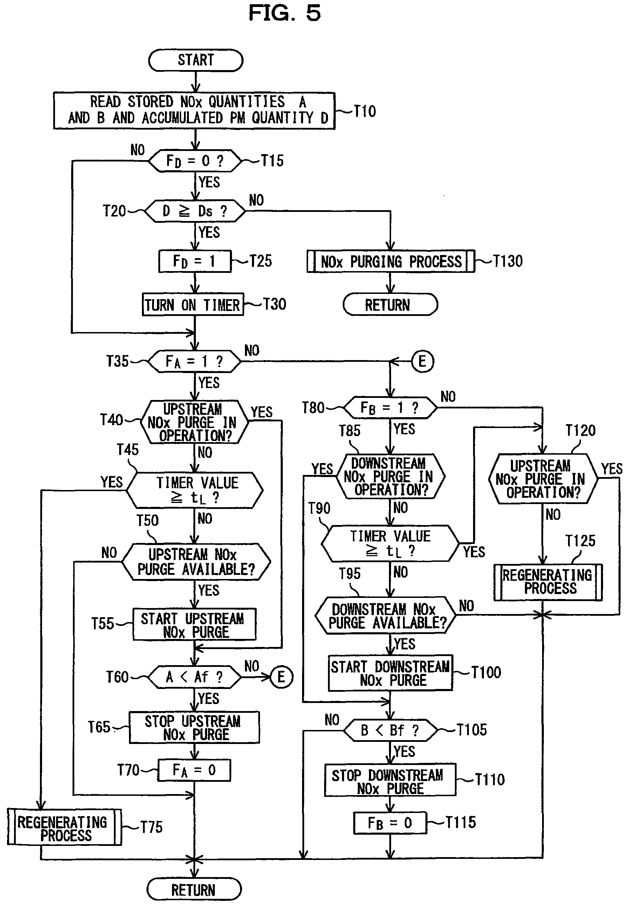

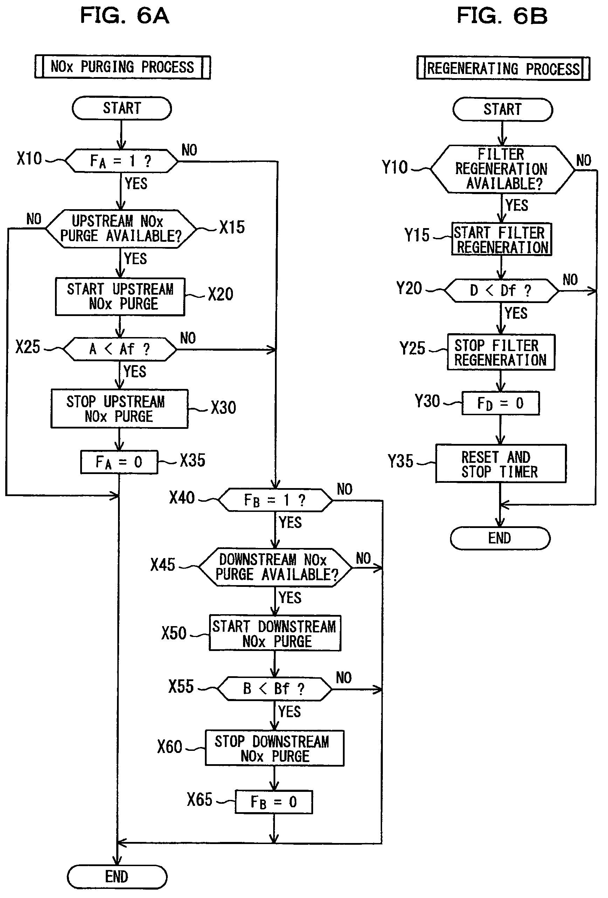

FIGS. 4 to 6 are flowcharts illustrating the NOx purging controls and the regenerating control. FIG. 4 illustrates a procedure for determination of requirement for the upstream and downstream NOx purging controls. FIG. 5 illustrates the upstream and downstream NOx purging controls and the regenerating control. FIGS. 6A and 6B are each a sub-flowchart of FIG. 5. FIG. 6A illustrates the upstream and downstream NOx purging controls, and FIG. 6B illustrates the regenerating control. These processes are repeated in the engine controller 40 in a predetermined operation cycle. It is noted that the estimator 41 estimates the stored NOx quantities A and B and the accumulated PM quantity D all the time independently from these processes. The NOx purging controller 42 and the regenerating controller 43 read the estimated quantities and execute the upstream NOx purging control, the downstream NOx purging control, and the regenerating control.

The process in FIG. 4 executed in the NOx purging controller 42 will now be explained. With reference to FIG. 4, the NOx purging controller 42 determines whether a flag F_{A} is 0 (F_{A}=0) in Step S10. The flag F_{A} represents the requirement (necessity) for the upstream NOx purging control. In specific, F_{A}=1 indicates that the upstream NOx purging control is necessary (in other words, the presence of the requirement), whereas F_{A}=0 indicates that the upstream NOx purging control is not necessary (in other words, no requirement) . If the flag F_{A} is 0 (F_{A}=0), the NOx purging controller 42 reads the stored NOx quantity A estimated by the estimator 41 in Step S15, and determines whether the stored NOx quantity A is larger than the determination threshold As (A > As) in Step S20.

If A is larger than As (A > As), the NOx purging controller 42 determines whether the stored NOx quantity A is equal to or larger than the upper limit threshold Ah (A ≥ Ah) in Step S25. If A is Ah or larger (A ≥ Ah), which indicates that the upstream NOx purging control is necessary regardless of the stored NOx quantity B in the downstream NOx trapping catalyst 33; then the NOx purging controller 42 sets the flag F_{A} to 1 (F_{A}=1) in Step S30, and the process goes to Step S35. In Step S35, the NOx purging controller 42 determines whether the flag F_{B} is 0 (F_{B}=0). The flag F_{B} represents the requirement (necessity) for the downstream NOx purging control. In specific, F_{B}=1 indicates that the downstream NOx purging control is necessary (in other words, the presence of the requirement), whereas F_{B}=0 indicates that the downstream NOx purging control is not necessary (in other words, no requirement). If the flag F_{B} is 0 (F_{B}=0), the NOx purging controller 42 reads the stored NOx quantity B estimated by the estimator 41 in Step S40, and determines whether the stored NOx quantity B is larger than the determination threshold Bs (B > Bs) in Step S45. If B is larger than Bs (B > Bs), which indicates the stored NOx quantities A and B larger than the respective determination thresholds As and Bs, then the NOx purging controller 42 sets the flag F_{B} to 1 (F_{B}=1) in Step S50, and the process returns. This process determines that both the upstream and downstream NOx purging controls are necessary.

If A is not larger than As (A ≤ As) in Step S20, the process goes to Step S80 while the flag F_{A} remains 0 (F_{A}=0). In Step S80, the NOx purging controller 42 determines whether the flag F_{B} is 0 (F_{B}=0). If the flag F_{B} is 0 (F_{B}=0), the NOx purging controller 42 reads the stored NOx quantity B in Step S85, and determines whether the stored NOx quantity B is equal to or larger than the upper limit threshold Bh (B ≥ Bh) in Step S90. If B is Bh or larger (B ≥ Bh), which indicates that the downstream NOx purging control is necessary, then the NOx purging controller 42 sets the flag F_{B} to 1 (F_{B}=1) in Step S95, and the process returns. If B is smaller than Bh (B < Bh), the process returns while the flag F_{B} remains 0 (F_{B}=0).

If the stored NOx quantity A is smaller than the upper limit threshold Ah (A < Ah) in Step S25, the NOx purging controller 42 determines whether the flag F_{B} is 0 (F_{B}=0) in Step S55. If the flag F_{B} is 0 (F_{B}=0), the NOx purging controller 42 reads the stored NOx quantity B in Step S60, and determines whether the stored NOx quantity B is larger than the determination threshold Bs (B > Bs) in Step S65.

If B is larger than Bs (B > Bs), which indicates the stored NOx quantities A and B respectively exceeding the determination thresholds As and Bs, then the NOx purging controller 42 sets the flag F_{A} to 1 (F_{A}=1) in Step S70 and sets the flag F_{B} to 1 (F_{B}=1) in Step S75, and the process returns. This process determines that both the upstream and downstream NOx purging controls are necessary. If B is not larger than Bs (B ≤ Bs), the process returns while the flag F_{B} remains 0 (F_{B}=0).

If the flag F_{A} has already been set to 1 (F_{A}=1), the NOx purging controller 42 does not determine the requirement for the upstream NOx purging control until the termination of the upstream NOx purging control. The process skips from Step S10 to Step S35, and the NOx purging controller 42 determines the requirement for the downstream NOx purging control. If the flag F_{B} has already been set to 1 (F_{B}=1), the NOx purging controller 42 does not determine the requirement for the downstream NOx purging control until the termination of the downstream NOx purging control. The process from Step S35, S55, or S80 returns. The information on the flags F_{A} and F_{B} that are set as explained above is referenced in the processes in FIGS. 5 and 6A.

The processes in FIGS. 5, 6A, and 6B executed in the NOx purging controller 42 and the regenerating controller 43 will now be explained. With reference to FIG. 5, the stored NOx quantities A and B and the accumulated PM quantity D estimated by the estimator 41 are read in Step T10, and whether the flag F_{D} is 0 (F_{D}=0) is determined in Step T15. The flag F_{D} represents the requirement (necessity) for the regenerating control. In specific, F_{D}=1 indicates that the regenerating control is necessary (in other words, the presence of the requirement), whereas F_{D}=0 indicates that the regenerating control is not necessary (in other words, no requirement). If the flag F_{D} is 0 (F_{D}=0), whether the accumulated PM quantity D is equal to or larger than the regeneration initiation threshold Ds (D ≥ Ds) is determined in Step T20. If D is Ds or larger (D ≥ Ds), the flag F_{D} is set to 1 (F_{D}=1) in Step T25, and a timer is started in Step T30. The timer measures a waiting time of the regenerating control. Once the flag F_{D} is set to 1 (F_{D}=1), the process skips from Step T15 to the Step T35. If D is smaller than Ds (D < Ds), which indicates that the regenerating control for the filter 32 is not necessary, then the NOx purging controller 42 starts the NOx purging controls illustrated in FIG. 6A in Step T130.

In Step T35, whether the flag F_{A} is 1 (F_{A}=1) is determined. If the flag F_{A} is 1 (F_{A}=1), the upstream NOx purging control is prioritized to the regenerating control. If the flag F_{A} is 0 (F_{A}=0), whether the flag F_{R} is 1 (F_{B}=1) is determined in Step T80. If the flag F_{B} is 1 (F_{B}=1), the downstream NOx purging control is prioritized to the regenerating control. If the flags F_{A} and F_{B} are both 0, which indicates that neither the upstream nor downstream NOx purging control is necessary (in other words, no requirement for the upstream or downstream NOx purging control), the process goes through the "NO" route from Step T120, and then the regenerating controller 43 readily executes the regenerating control in Step T125.

In Step T40, whether the upstream NOx purging control is in operation is determined. If the upstream NOx purging control has not yet been started, whether the timer value (waiting time) becomes equal to or larger than the predetermined period t_{L} is determined in Step T45. If the timer value is smaller than the predetermined period t_{L}, whether the engine 1 is in an operating state compatible with the upstream NOx purging control is determined in Step T50. In such an operating state (in other words, if the upstream NOx purging control is available), the NOx purging controller 42 starts to control the upstream NOx purge in Step T55.

If the engine 1 is not in an operating state compatible with the upstream NOx purging control, the process returns. In this case, if the engine 1 becomes such an operating state before the timer value reaches the predetermined period t_{L} in subsequent operation cycles, the NOx purging controller 42 starts to control the upstream NOx purge. Once the upstream NOx purging control is started, it continues until the stored NOx quantity A falls below the termination threshold Af in Steps T40 and T60. If the stored NOx quantity A falls below the termination threshold Af (A < Af), the NOx purging controller 42 terminates the upstream NOx purging control in Step T65. The flag F_{A} is reset to 0 (F_{A}=0) in Step T70, and then the process returns. If the downstream NOx purging control is determined not to be necessary, the regenerating controller 43 starts the regenerating control illustrated in FIG. 6B in Step T125 in the subsequent operation cycle.

If the timer value is equal to or larger than the predetermined period t_{L} before the engine 1 becomes an operating state compatible with the upstream NOx purging control, the regenerating controller 43 starts the regenerating control illustrated in FIG. 6B in Step T75. In other words, although the upstream NOx purging control is prioritized to the regenerating control, the engine 1 does not become an operating state compatible with the upstream NOx purging control within the predetermined period t_{L} after the regenerating control is determined to be necessary. The regenerating control thus precedes the upstream NOx purging control.

After the start of the upstream NOx purging control before a fall of A below Af (A < Af), the process goes to Step T80 and whether the flag F_{B} is 1 (F_{B}=1) is determined. If the flag F_{B} is 1 (F_{B}=1), whether the downstream NOx purging control is in operation is determined in Step T85. If the downstream NOx purging control has not yet been started, whether the timer value (waiting time) becomes equal to or larger than the predetermined period t_{L} is determined in Step T90. If the timer value is smaller than the predetermined period t_{L}, whether the engine 1 is in an operating state compatible with the downstream NOx purging control is determined in Step T95. In such an operating state (in other words, if the downstream NOx purging control is available), the NOx purging controller 42 starts to control the downstream NOx purge in Step T100. Accordingly, the downstream NOx purging control is started after the start of the upstream NOx purging control, resulting in the simultaneous and continuous execution of the two NOx purging controls.

If the engine 1 is not in an operating state compatible with the downstream NOx purging control in Step T95, the process returns. If the engine 1 becomes such an operating state before the timer value reaches the predetermined period t_{L} in subsequent operation cycles, the NOx purging controller 42 starts to control the downstream NOx purge, resulting in the simultaneous and continuous execution of the upstream and downstream NOx purging controls. Once the downstream NOx purging control is started, it continues until the stored NOx quantity B falls below the termination threshold Bf in Steps T85 and T105. If the stored NOx quantity B falls below the termination threshold Bf (B < Bf), the NOx purging controller 42 terminates the downstream NOx purging control in Step T110. The flag F_{B} is reset to 0 (F_{H}=0) in Step T115, and then the process returns. In the subsequent operation cycle, the regenerating controller 43 starts the regenerating control illustrated in FIG. 6B in Step T125.

If the timer value is equal to or larger than the predetermined period t_{L} before the engine 1 becomes an operating state compatible with the downstream NOx purging control, whether the upstream NOx purging control is in operation is determined in Step T120. If the upstream NOx purging control is in operation; then the process returns; otherwise the regenerating controller 43 starts the regenerating control illustrated in FIG. 6B in Step T125, and the process returns. In other words, although the downstream NOx purging control is prioritized to the regenerating control, the engine 1 does not become an operating state compatible with the downstream NOx purging control within the predetermined period t_{L} after the regenerating control is determined to be necessary. The regenerating control thus precedes the downstream NOx purging control. If the upstream NOx purging control is in operation, the regenerating controller 43 readily executes the regenerating control after the termination of the upstream NOx purging control.

The NOx purging controls in Step T130 will now be explained. With reference to FIG. 6A, whether the flag F_{A} is 1 (F_{A}=1) is determined in Step X10. If the flag F_{A} is 1 (F_{A}=1), whether the engine 1 is in an operating state compatible with the upstream NOx purging control is determined in Step X15. In such an operating state (in other words, if the upstream NOx purging control is available), the NOx purging controller 42 starts to control the upstream NOx purge in Step X20. If the engine 1 is not in such an operating state, the process ends and the main process in FIG. 5 returns. In the process in Step T130 in subsequent operation cycles, the NOx purging controller 42 starts to control the upstream NOx purge when the engine 1 becomes an operating state compatible with the upstream NOx purging control.

After the start of the upstream NOx purging control, whether A is smaller than Af (A < Af) is determined in Step X25. If A is not smaller than Af (A ≥ Af), whether the flag F_{B} is 1 (F_{B}=1) is determined in Step X40. If the flag F_{B} is 1 (F_{B}=1), whether the engine 1 is in an operating state compatible with the downstream NOx purging control is determined in Step X45. In such an operating state (in other words, if the downstream NOx purging control is available), the NOx purging controller 42 starts to control the downstream NOx purge in Step X50. If the engine 1 is not in such an operating state, the process ends and the main process in FIG. 5 returns. In the process in Step T130 in subsequent operation cycles, the NOx purging controller 42 starts to control the downstream NOx purge when the engine 1 becomes an operating state compatible with the downstream NOx purging control.

After the start of the downstream NOx purging control, whether B is smaller than Bf (B < Bf) is determined in Step X55. If B is not smaller than Bf (B ≥ Bf), the process ends and the main process in FIG. 5 returns. If the stored NOx quantity A read in Step T10 falls below the termination threshold Af (A < Af) in Step X25, the NOx purging controller 42 terminates the upstream NOx purging control in Step X30. The flag F_{A} is then reset to 0 (F_{A}=0) in Step X35, and the process ends. If the stored NOx quantity B read in Step T10 falls below the termination threshold Bf (B < Bf) in Step X55, the NOx purging controller 42 terminates the downstream NOx purging control in Step X60. The flag F_{B} is then reset to 0 (F_{B}=0) in Step X65, and the process ends.

The regenerating control in Step T75 or T125 will now be explained. With reference to FIG. 6B, whether the engine 1 is in an operating state compatible with the regenerating control is determined in Step Y10. In such an operating state (in other words, if the regenerating control is available), the regenerating controller 43 starts the regenerating control in Step Y15. If the engine 1 is not in such an operating state, the process ends and the main process in FIG. 5 returns. In the process in Step T75 or T125 in subsequent operation cycles, the regenerating controller 43 starts the regenerating control when the engine 1 becomes an operating state compatible with the regenerating control.

After the start of the regenerating control, whether the accumulated PM quantity D falls below the regeneration termination threshold Df (D < Df) is determined in Step Y20. The regenerating control continues until D falls below Df (D < Df). If D falls below Df (D < Df), the regenerating controller 43 terminates the regenerating control in Step Y25, the flag F_{D} is reset to 0 (F_{D}=0) in Step Y30, the timer value is reset and the timer is stopped in Step Y35, and the process ends.

### [1-4. Advantageous Effects]

In the exhaust purifying apparatus 30, the determination thresholds As and Bs for the simultaneous and continuous execution of the NOx purging controls for the upstream NOx trapping catalyst 31 and the downstream NOx trapping catalyst 33 are adjusted to be smaller than the respective upper limit thresholds Ah and Bh for the execution of one of the NOx purging controls alone. This adjustment allows the NOx purging controls for the upstream NOx trapping catalyst 31 and the downstream NOx trapping catalyst 33 to be executed simultaneously and continuously as much as possible, thereby effectively preventing a decrease in the fuel efficiency.

In the simultaneous and continuous execution of the upstream and downstream NOx purging controls, the exhaust purifying apparatus 30 starts the downstream NOx purging control after the start of the upstream NOx purging control. This configuration allows the reductant unconsumed in the upstream NOx purging control to be used in the downstream NOx purging control, thereby further preventing a decrease in the fuel efficiency. In addition, the downstream NOx trapping catalyst 33 can be readily heated to a desirable temperature through the upstream NOx purging control, to improve the NOx reduction efficiency in the downstream NOx trapping catalyst 33.

The exhaust purifying apparatus 30 includes the upstream NOx trapping catalyst 31, the filter 32, and the downstream NOx trapping catalyst 33 in the exhaust path 16 in sequence from the upstream side in the flow of exhaust gas. In other words, the filter 32 having a high thermal capacity is interposed between the upstream NOx trapping catalyst 31 and the downstream NOx trapping catalyst 33 in the exhaust path 16. The upstream NOx trapping catalyst 31 and the downstream NOx trapping catalyst 33 are disposed in different temperature zones, and thus have high purification performance of NOx in different operating states. This configuration can improve the purification performance of NOx in the apparatus. In other words, the configuration can ensure high purification performance of NOx over all the operating regions of the engine 1. Accordingly, the exhaust purifying apparatus 30 can appropriately remove NOx from exhaust gas with sufficient fuel efficiency.

If the regenerating control is determined to be executed based on the accumulated PM quantity D in the filter 32 and the upstream and downstream NOx purging controls are determined to be executed, the exhaust purifying apparatus 30 starts the regenerating control after the start of the upstream and downstream NOx purging controls. During the regenerating control for the filter 32, NOx emitted from the cylinders 2 increases. If the regenerating control is determined to be executed and if the upstream and downstream NOx purging controls are determined to be necessary, the NOx purging controls should precede the regenerating control. The upstream NOx trapping catalyst 31 and the downstream NOx trapping catalyst 33 can thus store NOx during the regenerating control, to reduce the NOx emission.

If the waiting time from the determination of the regenerating control to be executed to the start of the regenerating control becomes equal to or longer than the predetermined period t_{L}, the exhaust purifying apparatus 30 starts the regenerating control in advance of the upstream and downstream NOx purging controls. The limitation of the waiting time of the regenerating control for the filter 32 can prevent trouble of the engine 1 caused by a large quantity of PMs accumulated in the filter 32.

According to the first embodiment, the upstream injector 34 is disposed directly upstream of the upstream NOx trapping catalyst 31, and injects the reductant in the upstream NOx purging control. The upstream NOx trapping catalyst 31 is often surrounded by an oxygen-rich atmosphere during the upstream NOx purging control. In this condition, the direct injection from the upstream injector 34 to the exhaust path 16 can supply a highly reactive reductant to the upstream NOx trapping catalyst 31, leading to effective reduction of NOx in the upstream NOx trapping catalyst 31. In contrast, the downstream NOx trapping catalyst 33 is often surrounded by a low-oxygen atmosphere during the downstream NOx purging control. In this condition, the post-injection can sufficiently supply the downstream NOx trapping catalyst 33 with fuel functioning as a reductant. The exhaust purifying apparatus 30 thus has a simpler configuration and can be fabricated at lower costs, in comparison to an apparatus further including an exhaust-path injection valve directly upstream of the downstream NOx trapping catalyst 33 for injecting a reductant.

### [2. Second Embodiment]

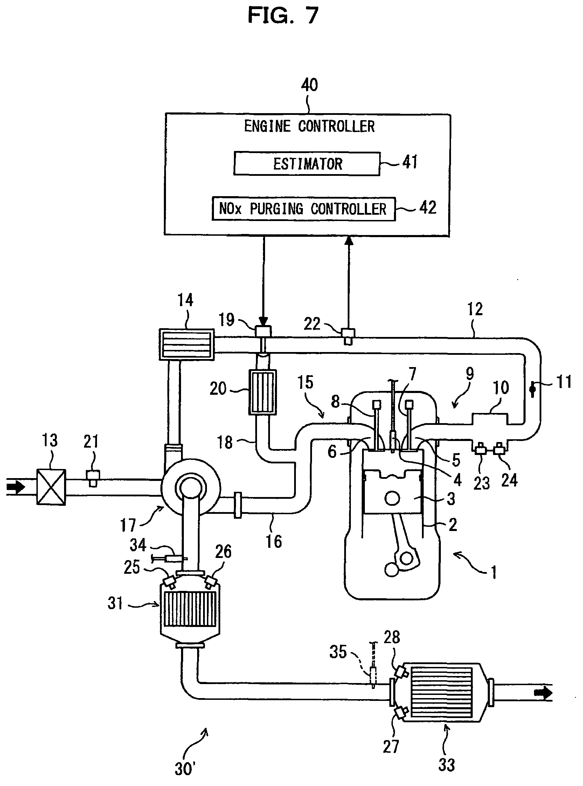

An exhaust purifying apparatus 30' according to a second embodiment will now be described with reference to FIG. 7. The exhaust purifying apparatus 30' has the same configuration as that of the first embodiment, except for lacking the filter 32 between the upstream NOx trapping catalyst 31 and the downstream NOx trapping catalyst 33. It is noted that an engine controller 40 according to the second embodiment lacks the regenerating controller 43 for controlling the regeneration of the filter 32. The components identical to those in the first embodiment are identified by the same reference signs and the redundant description thereof is simplified.

With reference to FIG. 7, the exhaust purifying apparatus 30' according to the second embodiment includes an upstream NOx trapping catalyst (first catalyst) 31 and a downstream NOx trapping catalyst (second catalyst) 33, which are disposed downstream of the turbine of the exhaust path 16, in sequence from the upstream side in the flow of exhaust gas. The quantity A of NOx stored in the upstream NOx trapping catalyst 31 and the quantity B of NOx stored in the downstream NOx trapping catalyst 33 are estimated by the estimator 41 of the engine controller (controller) 40, as in the first embodiment.

If the stored NOx quantity A in the upstream NOx trapping catalyst 31 is equal to or larger than an upper limit threshold (first threshold) Ah, the NOx purging controller 42 executes an upstream NOx purging control (first purging control). If the stored NOx quantity B in the downstream NOx trapping catalyst 33 is equal to or larger than an upper limit threshold (second threshold) Bh, the NOx purging controller 42 executes a downstream NOx purging control (second purging control). If the stored NOx quantity A in the upstream NOx trapping catalyst 31 exceeds a determination threshold (third threshold) As and if the stored NOx quantity B in the downstream NOx trapping catalyst 33 exceeds a determination threshold (fourth threshold) Bs, the NOx purging controller 42 simultaneously and continuously executes both the upstream and downstream NOx purging controls. In this case, the NOx purging controller 42 starts the upstream NOx purging control and then starts the downstream NOx purging control. The upstream and downstream NOx purging controls according to the second embodiment end with an stored NOx quantity A or B less than a termination threshold (fifth threshold) Af or a termination threshold (sixth threshold) Bf, respectively. The thresholds Ah, Bh, As, Bs, Af, and Bf are identical to the respective thresholds in the first embodiment.

The exhaust purifying apparatus 30' can simultaneously and continuously execute the NOx purging controls for the upstream NOx trapping catalyst 31 and the downstream NOx trapping catalyst 33 as much as possible, thereby effectively maintaining sufficient fuel efficiency, as in the first embodiment. In the simultaneous and continuous execution of the upstream and downstream NOx purging controls, the exhaust purifying apparatus 30' starts the downstream NOx purging control after the start of the upstream NOx purging control. This configuration allows the reductant unconsumed in the upstream NOx purging control to be used in the downstream NOx purging control, thereby further preventing a decrease in the fuel efficiency. In addition, the downstream NOx trapping catalyst 33 can be readily heated to a desirable temperature through the upstream NOx purging control, to improve the NOx reduction efficiency in the downstream NOx trapping catalyst 33.

### [3. Modifications]

The above-described embodiments should not be construed to limit the invention and may be modified in various manners without departing from the gist of the invention. The individual features of the embodiments may be selectively employed as necessary or properly combined with one another.

For example, the above-explained timing of start of the downstream NOx purging control is given for illustration. The downstream NOx purging control may also be started after a temperature rise of the downstream NOx trapping catalyst 33 to a predetermined temperature due to the preceding upstream NOx purging control is determined based on the temperature of exhaust gas directly upstream of the downstream NOx trapping catalyst 33 detected by the exhaust-gas temperature sensor 28. This configuration can reduce the reductant (fuel) injected in the downstream NOx purging control, thereby improving the fuel efficiency. Alternatively, the start of the upstream NOx purging control may be simultaneous with or delayed from the start of the downstream NOx purging control. This configuration can also prevent a decrease in the fuel efficiency.

According to the first embodiment, if the regenerating control and the upstream and downstream NOx purging controls are both required, the regenerating control is started after the start of the upstream and downstream NOx purging controls. Alternatively, if at least the regenerating control and the downstream NOx purging control are determined to be necessary, the regenerating control may be started after the start of the downstream NOx purging control in their parallel execution. During the regenerating control, exhaust gas has a high temperature and thus the downstream NOx trapping catalyst 33 mainly stores NOx. In order to reduce the NOx emission, at least the downstream NOx trapping catalyst 33 should recover the capacity of storing NOx through the reduction of NOx in the downstream NOx trapping catalyst 33 before the regenerating control. In this case, the flag F_{B} on the downstream NOx trapping catalyst 33 may be checked for in advance of the check of the flag F_{A} on the upstream NOx trapping catalyst 31, for example, in the flowchart illustrated in FIG. 5.

The downstream NOx purging control involves post-injection in the above explanation. Alternatively, the exhaust path 16 may be further provided with a downstream injector 35 in a section downstream of the filter 32 and directly upstream of the downstream NOx trapping catalyst 33, as illustrated with a two-dot chain line in FIG. 1. The downstream injector 35 directly supplies the exhaust path 16 with a reductant, such as carbon monoxide (CO) or hydrocarbon (HC), like the upstream injector 34. The leading end of the downstream injector 35 protrudes in the exhaust path 16. The base end of the downstream injector 35 is connected to a fuel pipe leading to a fuel pump. The downstream injector 35 may directly inject the reductant into the exhaust path 16 to reduce NOx in the downstream NOx trapping catalyst 33 in the downstream NOx purging control.

The termination of the NOx purging controls may be determined based on, for example, periods of the NOx purging controls, instead of the stored NOx quantities A and B. In the same manner, the start or termination of the regenerating control may be determined based on the difference in pressure or a time period, instead of the above-explained condition.

The engine controller 40 includes the estimator 41, the NOx purging controller 42, and the regenerating controller 43 according to the first embodiment, whereas the engine controller 40 includes the estimator 41 and the NOx purging controller 42 according to the second embodiment. Alternatively, these functions may be assigned to multiple different controllers.

The upstream NOx trapping catalyst 31 and the downstream NOx trapping catalyst 33 may be composed of different types and different quantities of storing agents and noble metals. The above-described diesel engine 1 is given for illustration, and may be replaced with a diesel engine having another configuration or a gasoline engine.

In the first and second embodiments, NOx is described as a predetermined component of exhaust gas, and the NOx purging controls for the NOx trapping catalysts 31 and 33 for storing NOx are explained in detail. Alternatively, the predetermined component of exhaust gas maybe, for example, a sulfur component. In other words, the NOx trapping catalysts 31 and 33 may store the sulfur component of exhaust gas in an oxidizing atmosphere and release the sulfur component in a reducing atmosphere. In this case, if the quantity of the sulfur component stored in the upstream NOx trapping catalyst 31 becomes equal to or larger than a predetermined first threshold, the engine controller 40 executes an upstream S purging control (first purging control) involving the release of the sulfur component from the upstream NOx trapping catalyst 31 through supply of a reductant. If the quantity of the sulfur component stored in the downstream NOx trapping catalyst 33 becomes equal to or larger than a predetermined second threshold, the engine controller 40 executes a downstream S purging control (second purging control) involving the release of the sulfur component from the downstream NOx trapping catalyst 33 through supply of the reductant.

If the quantity of the sulfur component stored in the upstream NOx trapping catalyst 31 exceeds a third threshold smaller than the first threshold and if the quantity of the sulfur component stored in the downstream NOx trapping catalyst 33 exceeds a fourth threshold smaller than the second threshold, the engine controller 40 simultaneously and continuously executes the upstream and downstream S purging controls. Such engine controller 40 can execute the S purging controls for the upstream NOx trapping catalyst 31 and the downstream NOx trapping catalyst 33 simultaneously and continuously as much as possible, thereby effectively maintaining sufficient fuel efficiency. The engine controller 40 starts the downstream S purging control after the start of the upstream S purging control. This configuration can rapidly heat the downstream NOx trapping catalyst 33, to shorten the period of the downstream S purging control. The configuration thus can reduce the fuel consumed in the downstream S purging control, thereby preventing a decrease in the fuel efficiency.

### REFERENCE SIGNS LIST

- 1: engine (internal combustion engine)
- 4: cylinder injection valve
- 16: exhaust path
- 30, 30': exhaust purifying apparatus
- 31: upstream NOx trapping catalyst (upstream catalyst)
- 32: filter
- 33: downstream NOx trapping catalyst (downstream catalyst)
- 34: upstream injector (injector)
- 40: engine controller (controller)
- 41: estimator
- 42: NOx purging controller
- 43: regenerating controller
- Ah: upstream upper limit threshold (first threshold)
- As: upstream determination threshold (third threshold)
- Bh: downstream upper limit threshold (second threshold)
- Bs: downstream determination threshold (fourth threshold)
- Af: upstream termination threshold (fifth threshold)
- Bf: downstream termination threshold (sixth threshold)

The invention thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An exhaust purifying apparatus (30) for an internal combustion engine (1), the apparatus comprising:
an upstream catalyst (31) disposed in an exhaust path (16) of the internal combustion engine (1), the upstream catalyst (31) storing a predetermined component of exhaust gas in an oxidizing atmosphere and releasing the predetermined component in a reducing atmosphere;
a downstream catalyst (33) disposed downstream of the upstream catalyst (31) in the exhaust path (16), the downstream catalyst (33) storing the predetermined component of the exhaust gas in an oxidizing atmosphere and releasing the predetermined component in a reducing atmosphere; and
**characterised by** a controller (40) adapted to execute a first purging control if a quantity of the predetermined component stored in the upstream catalyst (31) becomes equal to or larger than a first threshold, the first purging control involving release of the predetermined component from the upstream catalyst (31) through supply of a reductant, and to execute a second purging control if a quantity of the predetermined component stored in the downstream catalyst (33) becomes equal to or larger than a second threshold, the second purging control involving release of the predetermined component from the downstream catalyst (33) through supply of the reductant, wherein
if the quantity of the predetermined component stored in the upstream catalyst (31) exceeds a third threshold and if the quantity of the predetermined component stored in the downstream catalyst (33) exceeds a fourth threshold, the controller (40) simultaneously and continuously executes the first purging control and the second purging control, the third threshold being smaller than the first threshold, the fourth threshold being smaller than the second threshold.

2. The exhaust purifying apparatus (30) according to claim 1, wherein the controller (40) starts the second purging control after start of the first purging control in the simultaneous and continuous execution of the first purging control and the second purging control.

3. The exhaust purifying apparatus (30) according to claim 1 or 2, wherein if the quantity of the predetermined component stored in the upstream catalyst (31) falls below a fifth threshold smaller than the third threshold, the controller (40) stops the first purging control.

4. The exhaust purifying apparatus (30) according to any one of claims 1 to 3, wherein if the quantity of the predetermined component stored in the downstream catalyst (33) falls below a sixth threshold smaller than the fourth threshold, the controller (40) stops the second purging control.

5. The exhaust purifying apparatus (30) according to any one of claims 1 to 4, further comprising a filter (32) disposed between the upstream catalyst (31) and the downstream catalyst (33) in the exhaust path (16), the filter (32) trapping a particulate matter in the exhaust gas, wherein
the predetermined component comprises nitrogen oxides in the exhaust gas, and
the controller (40) starts a regenerating control after the start of at least one of the first purging control and the second purging control, in a case where the controller executes both the regenerating control and the at least one of the first purging control and the second purging control, the regenerating control involving removal of the particulate matter from the filter (32) based on the quantity of the particulate matter trapped in the filter (32).

6. The exhaust purifying apparatus (30) according to claim 5, wherein if a waiting time from determination of the regenerating control to be executed to the start of the regenerating control becomes equal to or longer than a predetermined period, the controller (40) starts the regenerating control in advance of the at least one of the first purging control and the second purging control.

7. The exhaust purifying apparatus (30) according to any one of claims 1 to 6, wherein
the controller (40) controls an injector (34) to supply the reductant during the first purging control, the injector (34) being disposed upstream of the upstream catalyst (31) in the exhaust path (16), and
the controller (40) controls cylinder injection valves (4) of the internal combustion engine (1) to supply the reductant during the second purging control.

## Patentansprüche

1. Abgasreinigungsvorrichtung (30) für einen Verbrennungsmotor (1), wobei die Vorrichtung aufweist:
einen stromaufwärts gelegenen Katalysator (31), der in einem Abgasweg (16) des Verbrennungsmotors (1) angeordnet ist, wobei der stromaufwärts gelegene Katalysator (31) eine vorbestimmte Komponente von Abgas in einer oxidierenden Atmosphäre speichert und die vorbestimmte Komponente in einer reduzierenden Atmosphäre freisetzt;
einen stromabwärts gelegenen Katalysator (33), der stromabwärts vom stromaufwärts gelegenen Katalysator (31) im Abgasweg (16) angeordnet ist, wobei der stromabwärts gelegene Katalysator (33) die vorbestimmte Komponente des Abgases in einer oxidierenden Atmosphäre speichert und die vorbestimmte Komponente in einer reduzierenden Atmosphäre freisetzt; und
**gekennzeichnet ist durch** ein Steuergerät (40), das geeignet ist, eine erste Spülsteuerung auszuführen, wenn eine Menge der im stromaufwärts gelegenen Katalysator (31) gespeicherten vorbestimmten Komponente gleich oder größer als ein erster Schwellwert wird, wobei die erste Spülsteuerung Freisetzung der vorbestimmten Komponente aus dem stromaufwärts gelegenen Katalysator (31) über Zufuhr eines Reduktionsmittels beinhaltet, und eine zweite Spülsteuerung auszuführen, wenn eine Menge der im stromabwärts gelegenen Katalysator (33) gespeicherten vorbestimmten Komponente gleich oder größer als ein zweiter Schwellwert wird, wobei die zweite Spülsteuerung Freisetzung der vorbestimmten Komponente aus dem stromabwärts gelegenen Katalysator (33) über Zufuhr des Reduktionsmittels beinhaltet, wobei
wenn die Menge der im stromaufwärts gelegenen Katalysator (31) gespeicherten vorbestimmten Komponente einen dritten Schwellwert übersteigt und wenn die Menge der im stromabwärts gelegenen Katalysator (33) gespeicherten vorbestimmten Komponente einen vierten Schwellwert übersteigt, das Steuergerät (40) die erste Spülsteuerung und die zweite Spülsteuerung gleichzeitig und kontinuierlich ausführt, wobei der dritte Schwellwert kleiner als der erste Schwellwert ist und der vierte Schwellwert kleiner als der zweite Schwellwert ist.

2. Abgasreinigungsvorrichtung (30) nach Anspruch 1, wobei das Steuergerät (40) die zweite Spülsteuerung nach Start der ersten Spülsteuerung bei der gleichzeitigen und kontinuierlichen Ausführung der ersten Spülsteuerung und der zweiten Spülsteuerung startet.

3. Abgasreinigungsvorrichtung (30) nach Anspruch 1 oder 2, wobei wenn die Menge der im stromaufwärts gelegenen Katalysator (31) gespeicherten vorbestimmten Komponente unter einen fünften Schwellwert fällt, der kleiner als der dritte Schwellwert ist, das Steuergerät (40) die erste Spülsteuerung stoppt.

4. Abgasreinigungsvorrichtung (30) nach einem der Ansprüche 1 bis 3, wobei wenn die Menge der im stromabwärts gelegenen Katalysator (33) gespeicherten vorbestimmten Komponente unter einen sechsten Schwellwert fällt, der kleiner als der vierte Schwellwert ist, das Steuergerät (40) die zweite Spülsteuerung stoppt.

5. Abgasreinigungsvorrichtung (30) nach einem der Ansprüche 1 bis 4, ferner mit einem Filter (32), das zwischen dem stromaufwärts gelegenen Katalysator (31) und dem stromabwärts gelegenen Katalysator (33) im Abgasweg (16) angeordnet ist, wobei das Filter (32) Partikel im Abgas abfängt, wobei
die vorbestimmte Komponente Stickoxide im Abgas aufweist und
das Steuergerät (40) eine Regenerationssteuerung nach dem Start der ersten Spülsteuerung und/oder der zweiten Spülsteuerung in einem Fall startet, in dem das Steuergerät sowohl die Regenerationssteuerung als auch die erste Spülsteuerung und/oder die zweite Spülsteuerung ausführt, wobei die Regenerationssteuerung Entfernung der Partikel aus dem Filter (32) auf der Grundlage der Menge der im Filter (32) abgefangenen Partikel beinhaltet.

6. Abgasreinigungsvorrichtung (30) nach Anspruch 5, wobei wenn eine Wartezeit ab Bestimmung der auszuführenden Regenerationssteuerung bis zum Start der Regenerationssteuerung gleich oder länger als eine vorbestimmte Periode wird, das Steuergerät (40) die Regenerationssteuerung vor der ersten Spülsteuerung und/oder der zweiten Spülsteuerung startet.

7. Abgasreinigungsvorrichtung (30) nach einem der Ansprüche 1 bis 6, wobei das Steuergerät (40) eine Einspritzdüse (34) steuert, um das Reduktionsmittel während der ersten Spülsteuerung zuzuführen, wobei die Einspritzdüse (34) stromaufwärts vom stromaufwärts gelegenen Katalysator (31) im Abgasweg (16) angeordnet ist,
und das Steuergerät (40) Zylindereinspritzventile (4) des Verbrennungsmotors (1) steuert, um das Reduktionsmittel während der zweiten Spülsteuerung zuzuführen.

## Revendications

1. Appareil de purification d'échappement (30) destiné à un moteur à combustion interne (1), l'appareil comprenant :
un catalyseur amont (31) disposé sur un trajet d'échappement (16) du moteur à combustion interne (1), le catalyseur amont (31) stockant un composant prédéterminé des gaz d'échappement dans une atmosphère d'oxydation et libérant le composant prédéterminé dans une atmosphère de réduction ;
un catalyseur aval (33) disposé en aval du catalyseur amont (31) sur le trajet d'échappement (16), le catalyseur aval (33) stockant le composant prédéterminé des gaz d'échappement dans une atmosphère d'oxydation et libérant le composant prédéterminé dans une atmosphère de réduction ; et
**caractérisé par** un contrôleur (40) adapté pour exécuter une première commande de purge si une quantité du composant prédéterminé stocké dans le catalyseur amont (31) devient égale ou supérieure à un premier seuil, la première commande de purge impliquant la libération du composant prédéterminé par le catalyseur amont (31) par le biais d'une alimentation en agent réducteur, et pour exécuter une seconde commande de purge si une quantité du composant prédéterminé stocké dans le catalyseur aval (33) devient égale ou supérieure à un second seuil, la seconde commande de purge impliquant la libération du composant prédéterminé par le catalyseur aval (33) par le biais d'une alimentation en agent réducteur, dans lequel
si la quantité de composant prédéterminé stocké dans le catalyseur amont (31) dépasse un troisième seuil et si la quantité de composant prédéterminé stocké dans le catalyseur aval (33) dépasse un quatrième seuil, le contrôleur (40) exécute simultanément et en continu la première commande de purge et la seconde commande de purge, le troisième seuil étant inférieur au premier seuil, le quatrième seuil étant inférieur au second seuil.

2. Appareil de purification d'échappement (30) selon la revendication 1, dans lequel le contrôleur (40) lance la seconde commande de purge après le lancement de la première commande de purge pendant l'exécution simultanée et continue de la première commande de purge et de la seconde commande de purge.

3. Appareil de purification d'échappement (30) selon la revendication 1 ou 2, dans lequel, si la quantité de composant prédéterminé stocké dans le catalyseur amont (31) devient inférieure à un cinquième seuil inférieur au troisième seuil, le contrôleur (40) arrête la première commande de purge.

4. Appareil de purification d'échappement (30) selon l'une quelconque des revendications 1 à 3, dans lequel, si la quantité de composant prédéterminé stocké dans le catalyseur aval (33) devient inférieure à un sixième seuil inférieur au quatrième seuil, le contrôleur (40) arrête la seconde commande de purge.

5. Appareil de purification d'échappement (30) selon l'une quelconque des revendications 1 à 4, qui comprend en outre un filtre (32) disposé entre le catalyseur amont (31) et le catalyseur aval (33) sur le trajet d'échappement (16), le filtre (32) piégeant une matière particulaire dans le gaz d'échappement, dans lequel
le composant prédéterminé comprend des oxydes d'azote dans les gaz d'échappement, et
le contrôleur (40) lance une commande de régénération après le lancement d'au moins l'une de la première commande de purge et de la seconde commande de purge, lorsque le contrôleur exécute la commande de régénération et ladite première commande de purge et/ou ladite seconde commande de purge, la commande de régénération impliquant l'élimination de la matière particulaire du filtre (32) sur la base de la quantité de matière particulaire piégée dans le filtre (32).

6. Appareil de purification d'échappement (30) selon la revendication 5, dans lequel, si un temps d'attente entre la détermination de la commande de régénération à exécuter et le lancement de la commande de régénération devient égal ou supérieur à une durée prédéterminée, le contrôleur (40) lance la commande de régénération avant ladite première commande de purge et/ou ladite seconde commande de purge.

7. Appareil de purification d'échappement (30) selon l'une quelconque des revendications 1 à 6, dans lequel
le contrôleur (40) commande un injecteur (34) destiné à fournir l'agent réducteur pendant la première commande de purge, l'injecteur (34) étant disposé en amont du catalyseur amont (31) sur le trajet d'échappement (16), et
le contrôleur (40) commande des soupapes d'injection à cylindres (4) du moteur à combustion interne (1) afin de fournir l'agent réducteur pendant la seconde commande de purge.
